(19)

**Europäisches Patentamt**

**European Patent Office**

**Office européen des brevets**

(11) **EP 3 825 804 A1**

(12) **EUROPEAN PATENT APPLICATION**
published in accordance with Art. 153(4) EPC

(43) Date of publication:
**26.05.2021 Bulletin 2021/21**

(21) Application number: **19838467.9**

(22) Date of filing: **25.06.2019**

(51) Int Cl.:
**G05D 1/02** *(2020.01)*

(86) International application number:
**PCT/CN2019/092775**

(87) International publication number:
**WO 2020/015501 (23.01.2020 Gazette 2020/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **17.07.2018 CN 201810785612**

(71) Applicant: **Beijing Sankuai Online Technology Co., Ltd**
**Beijing 100080 (CN)**

(72) Inventors:
• **SHEN, Hao**
**Beijing 100080 (CN)**
• **NIE, Qiong**
**Beijing 100080 (CN)**
• **HAO, Liliang**
**Beijing 100080 (CN)**
• **CHENG, Baoshan**
**Beijing 100080 (CN)**
• **WANG, Jingheng**
**Beijing 100080 (CN)**

(74) Representative: **Haseltine Lake Kempner LLP**
**Cheapside House**
**138 Cheapside**
**London**
**EC2V 6BJ (GB)**

(54) **MAP CONSTRUCTION METHOD, APPARATUS, STORAGE MEDIUM AND ELECTRONIC DEVICE**

(57)　This application provides a positioning method and apparatus, a storage medium and an electronic device. The method includes: determining a first spatial coordinate of an image capturing apparatus when the image capturing apparatus captures a depth image in a target space and determining attitude information of the image capturing apparatus when the image capturing apparatus captures the depth image; performing region segmentation on the depth image, to obtain at least one sub-region; determining a positioning sub-region in the at least one sub-region; determining a second spatial coordinate of the positioning sub-region in the target space based on distance information recorded in the depth image, the first spatial coordinate, and the attitude information; and constructing a map based on the second spatial coordinate.

Determine a first spatial coordinate of an image capturing apparatus when the image capturing apparatus captures a depth image in a target space and determine attitude information of the image capturing apparatus when the image capturing apparatus captures the depth image — 101

Perform region segmentation on the depth image, to obtain at least one sub-region — 102

Determine a positioning sub-region in the at least one sub-region — 103

Determine a second spatial coordinate of the positioning sub-region in the target space based on distance information recorded in the depth image, the first spatial coordinate, and the attitude information — 104

Construct a map based on the second spatial coordinate — 105

FIG. 1A

# Description

## TECHNICAL FIELD

This application relates to positioning technologies, and in particular, to a map construction method and apparatus, a storage medium, and an electronic device.

## BACKGROUND

During map construction based on a vision method, a feature map is constructed by using visual feature points in an image as features. Such map construction based on a vision method requires abundant feature points in a scene, and the feature points need to be stored in the map, resulting in excessive consumption of storage space.

## SUMMARY

In view of this, this application provides a map construction method and apparatus, a storage medium, and an electronic device, to improve accuracy of spatial point positioning, thereby ensuring that a constructed map can accurately record location information of a target point in a space.

According to a first aspect of this application, a map construction method is provided, including:

determining a first spatial coordinate of an image capturing apparatus when the image capturing apparatus captures a depth image in a target space and determining attitude information of the image capturing apparatus when the image capturing apparatus captures the depth image;

performing region segmentation on the depth image, to obtain at least one sub-region;

determining a positioning sub-region in the at least one sub-region;

determining a second spatial coordinate of the positioning sub-region in the target space based on distance information recorded in the depth image, the first spatial coordinate, and the attitude information; and

constructing a map based on the second spatial coordinate.

According to a second aspect of this application, a map construction apparatus is provided, including:

a first determining module, configured to determine a first spatial coordinate of an image capturing apparatus when the image capturing apparatus captures a depth image in a target space and determine attitude information of the image capturing apparatus when the image capturing apparatus captures the depth image;

an image segmentation module, configured to perform region segmentation on the depth image, to obtain at least one sub-region;

a second determining module, configured to determine a positioning sub-region in the at least one sub-region obtained by the image segmentation module;

a third determining module, configured to determine, based on distance information recorded in the depth image, and the first spatial coordinate and the attitude information determined by the first determining module, a second spatial coordinate of the positioning sub-region in the target space determined by the second determining module; and

a map construction module, configured to construct a map based on the second spatial coordinate.

According to a third aspect of this application, a storage medium is provided, storing a computer program, the computer program causing a processor to perform the map construction method according to the foregoing first aspect.

According to a fourth aspect of this application, an electronic device is provided, including:

a processor; and a memory, configured to store processor-executable instructions, where

the processor is configured to perform the map construction method according to the foregoing first aspect.

## BRIEF DESCRIPTION OF THE DRAWINGS

FIG. 1A is a schematic flowchart of a map construction method according to an exemplary embodiment of this application.

FIG. 1B is a top view of an image capturing apparatus in space in the embodiment shown in FIG. 1A.

FIG. 1C is a side view of the image capturing apparatus in space in the embodiment shown in FIG. 1A.

FIG. 1D is a schematic diagram of the image in the embodiment shown in FIG. 1A.

FIG. 1E is a schematic diagram after segmentation is performed on the image in the embodiment shown in FIG. 1A.

FIG. 2 is a schematic flowchart of a map construction method according to another exemplary embodiment of this application.

FIG. 3 is a schematic flowchart of a map construction method according to still another exemplary embodiment of this application.

FIG. 4 is a schematic flowchart of a map construction method according to yet another exemplary embodiment of this application.

FIG. 5 is a schematic structural diagram of a map construction apparatus according to an exemplary embodiment of this application.

FIG. 6 is a schematic structural diagram of a map construction apparatus according to another exemplary embodiment of this application.

FIG. 7 is a schematic structural diagram of an electronic device according to an exemplary embodiment of this application.

## DETAILED DESCRIPTION OF THE EMBODIMENTS

Exemplary embodiments are described in detail herein, and examples of the exemplary embodiments are shown in the accompanying drawings. When the following descriptions relate to the accompanying drawings, unless otherwise indicated, same numbers in different accompanying drawings represent same or similar elements. The implementations described in the following exemplary embodiments do not represent all implementations that are consistent with this application. On the contrary, the implementations are merely examples of apparatuses and methods that are described in detail in the appended claims and that are consistent with some aspects of this application.

The terms used in this application are for the purpose of describing specific embodiments only and are not intended to limit this application. The singular forms of "a" and "the" used in this application and the appended claims are intended to include the plural forms as well, unless the context clearly indicates otherwise. It should further be understood that the term "and/or" used herein indicates and includes any or all possible combinations of one or more associated listed items.

It should be understood that although the terms, such as "first", "second", and "third", may be used in this application to describe various information, the information should not be limited to the terms. The terms are merely used to distinguish between information of the same type. For example, without departing from the scope of this application, the first information may alternatively be referred to as the second information, and similarly, the second information may alternatively be referred to as the first information. According to the context, the word "if" used herein may be interpreted as "during" or "when" or "in response to determining".

This application is applicable to an electronic device. The electronic device can be a device, such as a robot, that can move in a specific space such as indoors or outdoors. In a process in which a robot moves in a specific space such as indoors or outdoors, a depth image is captured by using an image capturing apparatus on the robot, a target point in the space is positioned in real time based on the depth image and attitude/pose information of the image capturing apparatus when the image capturing apparatus captures the depth image, and a map is updated based on spatial coordinates obtained through positioning. The electronic device may alternatively be a computing device such as a personal computer and a server. In a process in which a robot moves in a specific space such as indoors or outdoors, a depth image is captured by using an image capturing apparatus on the robot, the depth image and attitude information of the image capturing apparatus when the image capturing apparatus captures the depth image are sent to a personal computer or a server, and the personal computer or the server calculates a three-dimensional spatial coordinate of a target point in the space based on the depth image and the attitude information of the image capturing apparatus when the image capturing apparatus captures the depth image, and constructs a map based on the three-dimensional spatial coordinate.

This application is described below in detail.

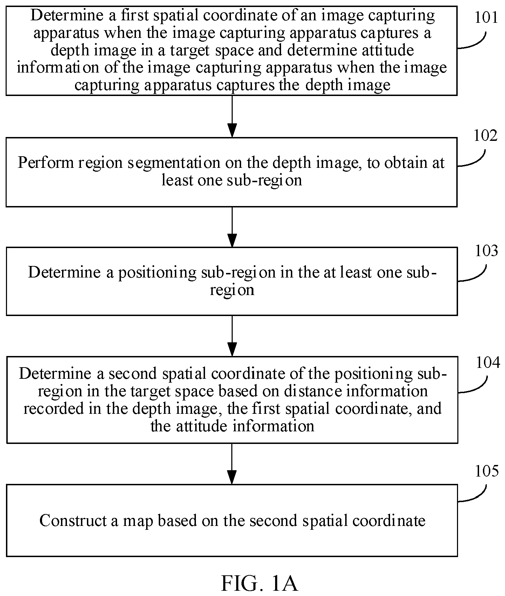

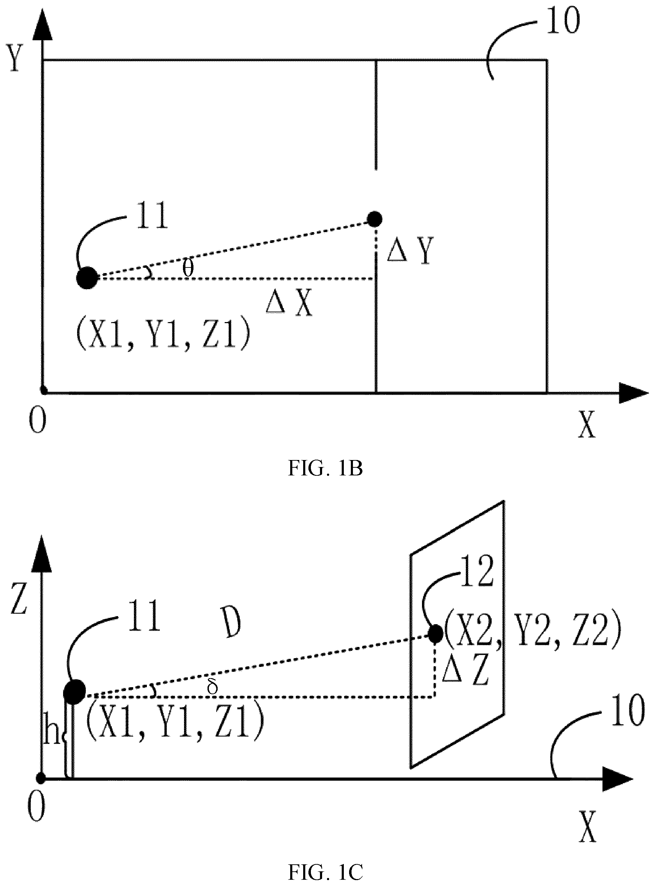

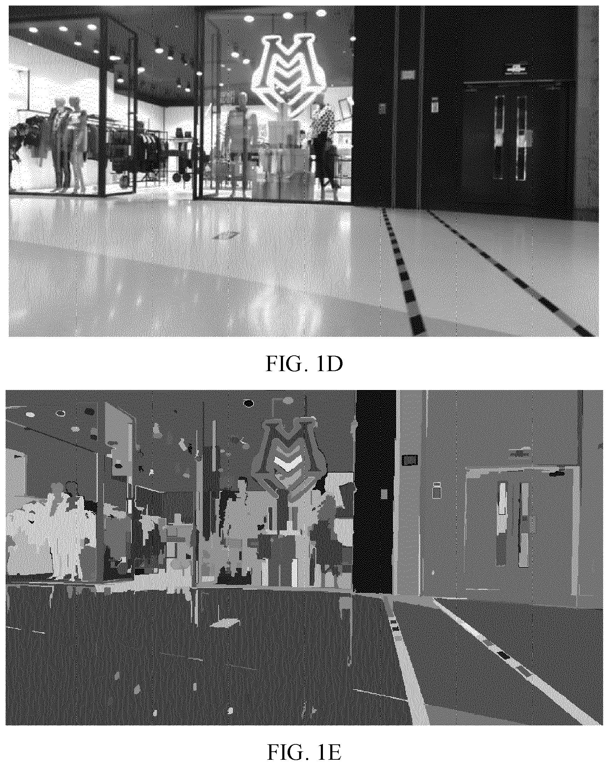

FIG. 1A is a schematic flowchart of a map construction method according to an exemplary embodiment of this application. FIG. 1B is a top view of an image capturing apparatus in space in the embodiment shown in FIG. 1A. FIG. 1C is a side view of the image capturing apparatus in space in the embodiment shown in FIG. 1A. FIG. 1D is a schematic diagram of the image in the embodiment shown in FIG. 1A. FIG. 1E is a schematic diagram after segmentation is performed on the image in the embodiment shown in FIG. 1A. This embodiment is applicable to an electronic device, for example, a robot that needs to perform indoor positioning, a robot that delivers goods, or a server, and as shown in FIG. 1A, the following steps are included:

Step 101: Determine a first spatial coordinate of an image capturing apparatus when the image capturing apparatus captures a depth image in a target space and determine attitude information of the image capturing apparatus when the image capturing apparatus captures the depth image.

As shown in FIG. 1B and FIG. 1C, a target space 10 is, for example, a shopping mall or a sports field. An indoor coordinate origin O (0, 0, 0) is at a corner of the space. In a world coordinate system XYZ in the target space 10, XY is a plane coordinate system in the target space 10, and a Z axis is perpendicular to the ground and is upward. A first spatial coordinate of an image capturing apparatus 11 in the target space 10 is (X1, Y1, Z1), where (X1, Y1) is a two-dimensional coordinate of the image capturing apparatus 11 in the plane coordinate system XY, and Z1 is a height h of the image capturing apparatus 11 from the ground. In an embodiment, the attitude information of the image capturing apparatus 11 when the image capturing apparatus captures the depth image may include rotation angles of the image capturing apparatus around three axes, where the rotation angle around the X axis is co, the rotation angle around the Y axis is $\delta$, and the rotation angle around the Z axis is $\theta$. In an embodiment, in addition to RGB (red, green and blue) color information, each pixel on the depth image further includes distance information D.

In an embodiment, the first spatial coordinate of the image capturing apparatus 11 during movement may be obtained through a laser positioning or marker positioning method.

Step 102: Perform region segmentation on the depth image, to obtain at least one sub-region.

In an embodiment, the depth image can be segmented by an image segmentation method, for example, a graph cut or grab cut algorithm, which is well known to a person skilled in the art, and after the image segmentation, an original image shown in FIG. 1D may be segmented into an image after region segmentation shown in FIG. IE, where a color block in which each gray level is located represents a sub-region. Region segmentation may be performed on the depth image based on gray level distribution of the depth image.

Step 103: Determine a positioning sub-region in the at least one sub-region.

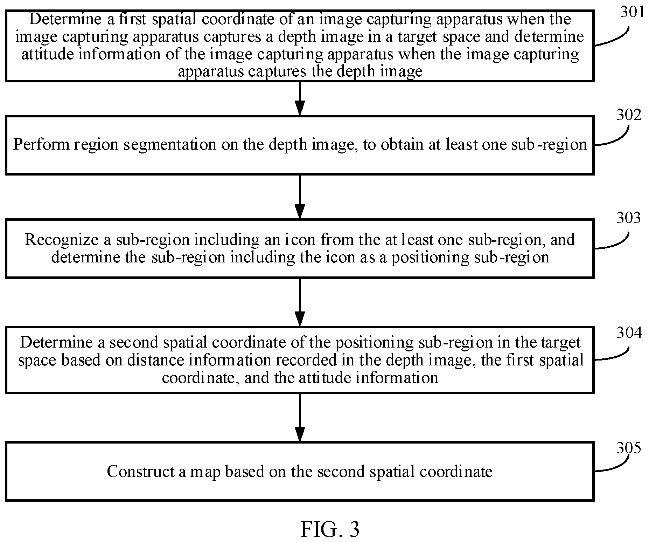

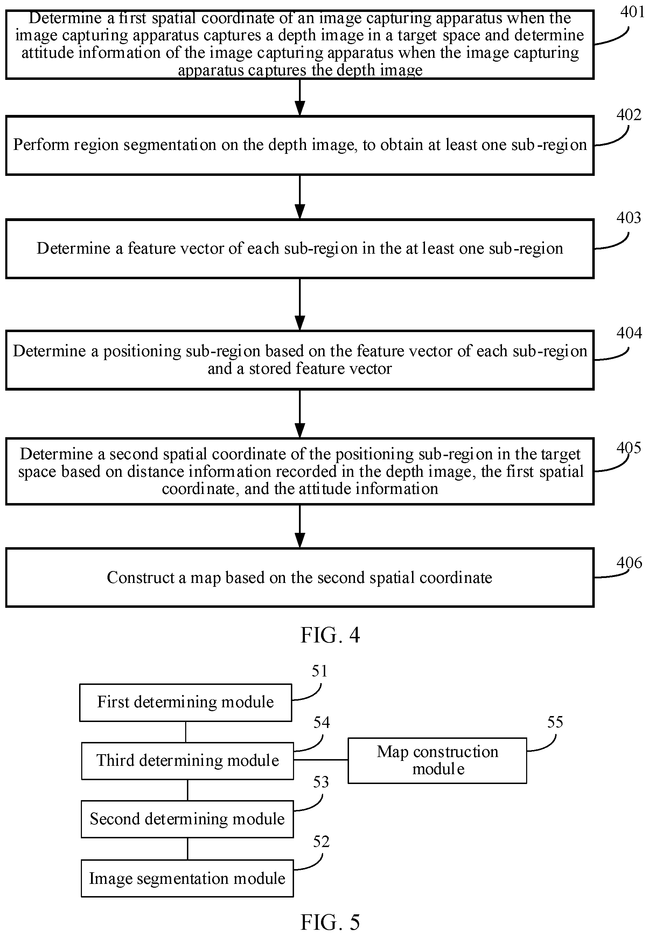

For how to determine a positioning sub-region in the at least one sub-region, refer to an embodiment shown in FIG. 3 or FIG. 4 in the following. Details are not described herein.

Step 104: Determine a second spatial coordinate of the positioning sub-region in the target space based on distance information recorded in the depth image, the first spatial coordinate, and the attitude information.

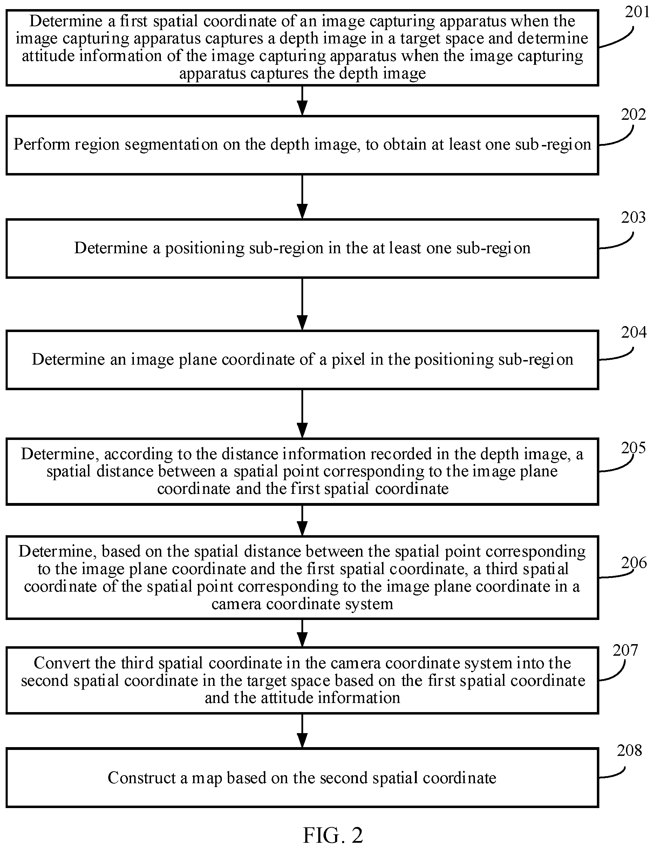

In an embodiment, the distance information recorded in the depth image may include a spatial distance between a spatial point corresponding to each pixel on the depth image and the image capturing apparatus, where the pixel is the mapping of the spatial point corresponding to the pixel on the image plane. After the positioning sub-region is determined, a coordinate of the pixel in the positioning sub-region on the image plane can be determined, and further, the spatial distance between the spatial point corresponding to the pixel and the image capturing apparatus is determined. For example, As shown in FIG. 1C, if the pixel corresponds to a spatial point 12 in the target space, and the coordinate of the pixel on the image plane is (x1, y1), the depth image can record a spatial distance D between the spatial point 12 and the image capturing apparatus. Based on the spatial distance D, the first spatial coordinate (X1, Y1, Z1), and the attitude information, a second spatial coordinate of the spatial point 12 (X2, Y2, Z2) corresponding to the pixel (x1, y1) in the positioning sub-region in the target space can be determined. For details, refer to the description of an embodiment shown in FIG. 2 in the following. The attitude information may include Euler angle information of the image capturing apparatus.

Step 105: Construct a map based on the second spatial coordinate.

As the robot moves in the target space, a plurality of depth images are captured, and second spatial coordinates of multiple objects in the target space can be obtained through step 101 to step 104, and further, the map constructed through step 105 can more accurately reflect location information of the object in the target space.

In this embodiment, at least one sub-region is obtained by segmenting the depth image, a positioning sub-region is determined in the at least one sub-region, and a map is constructed by using the second spatial coordinate of the positioning sub-region in the target space, so that the constructed map includes positioning information in the positioning sub-region, thereby preventing a useless feature point included in another sub-region from interfering with the map. In this way, fewer feature points are stored in the map. Because the map is constructed by using only the positioning sub-region in the entire image, a requirement for a quantity of feature points in the target space is relatively low, thereby greatly improving versatility in scenes. Because the second spatial coordinate include three-dimensional information of the positioning sub-region in the target space, the constructed map can further accurately record location information of the positioning sub-region in the target space.

FIG. 2 is a schematic flowchart of a map construction method according to another exemplary embodiment of this application. This embodiment describes how to determine a second spatial coordinate of the positioning sub-region in the target space based on the foregoing embodiments shown in FIG. 1A, FIG. 1B, and FIG. 1C, and as shown in FIG. 2, the following steps are included:

Step 201: Determine a first spatial coordinate of an image capturing apparatus when the image capturing apparatus captures a depth image in a target space and determine attitude information of the image capturing apparatus when the image capturing apparatus captures the depth image.

Step 202: Perform region segmentation on the depth image, to obtain at least one sub-region.

Step 203: Determine a positioning sub-region in the at least one sub-region.

For descriptions of step 201 to step 203, refer to the description of the foregoing embodiment shown in FIG. 1A. Details are not described herein again.

Step 204: Determine an image plane coordinate of a pixel in the positioning sub-region.

In an embodiment, an image plane coordinate (x1, y1) of the pixel in the positioning sub-region can be determined, and the pixel (x1, y1) is the mapping of the spatial point (X2, Y2, Z2) on an image plane. That is, on the image plane, the pixel (x1, y1) represents the spatial point (X2, Y2, Z2).

Step 205: Determine, according to the distance information recorded in the depth image, a spatial distance between a spatial point corresponding to the image plane coordinate and the first spatial coordinate.

In an embodiment, for the description of the distance information, reference may be made to the description of the foregoing embodiment shown in FIG. 1A. Details are not described herein again. In an embodiment, corresponding to the foregoing description of step 204, a spatial distance D between the pixel (x1, y1) corresponding to the spatial point (X2, Y2, Z2) and the image capturing apparatus can be learned based on the distance information recorded in the depth image. As shown in FIG. 1B and FIG. 1C, the spatial distance between the image capturing apparatus 11 and the spatial point 12 is D.

Step 206: Determine, based on the spatial distance between the spatial point corresponding to the image plane coordinate and the first spatial coordinate, a third spatial coordinate of the spatial point corresponding to the image plane coordinate in a camera coordinate system.

In an embodiment, the third spatial coordinate (X2', Y2', Z2') of the pixel in the camera coordinate system can be obtained by using a triangular transformation method in geometric imaging In the camera coordinate system, a direction of a line connecting the image capturing apparatus 11 to the spatial point 12 is a Z' axis in the camera coordinate system, the X'Y' plane is a vertical plane facing the image capturing apparatus 11, and the optical center of the image capturing apparatus 11 is a coordinate origin of the camera coordinate system.

In an embodiment, assuming that image plane coordinate of a pixel in the positioning sub-region is (x1, y1), f representing a focal length of the image capturing apparatus and Z2' representing distance information of a spatial point corresponding to the pixel are recorded in the depth image. Based on the principle of small hole imaging, $X2' = \frac{x1*Z2'}{f}$, and $Y2' = \frac{x1*Z2'}{f}$.

Step 207: Convert the third spatial coordinate in the camera coordinate system into the second spatial coordinate in the target space based on the first spatial coordinate and the attitude information.

In an embodiment, the third spatial coordinate in the camera coordinate system are converted into the second spatial coordinate in the target space through the spatial transformation matrix, where elements of the spatial transformation matrix include the attitude information and the first spatial coordinate. In an embodiment, if the attitude information of the image capturing apparatus in the world coordinate system is (X1, Y1, Z1, a roll $\theta$ (roll), a pitch co (pitch), and a yaw $\delta$ (yaw)), a corresponding spatial transformation matrix that is obtained is H = (R, T), where R is a rotation matrix obtained based on the roll $\theta$, the pitch co, and the yaw $\delta$, and T is a displacement vector obtained based on the first spatial coordinate. A relationship between the third spatial coordinate (X2', Y2', Z2') of the spatial point in the camera coordinate system and the second spatial coordinate (X2, Y2, Z2) of the spatial point in the world coordinate system is (X2', Y2', Z2') = R * (X2, Y2, Z2) + T.

Step 208: Construct a map based on the second spatial coordinate.

For the description of step 208, refer to the description of the foregoing embodiment shown in FIG. 1A. Details are not described herein again.

Based on the beneficial technical effects of the embodiment shown in FIG. 1A, since the elements of the spatial transformation matrix include attitude parameters and the first spatial coordinate of the image capturing apparatus, where the parameters all have high precision, through this embodiment, it can be ensured that the second spatial coordinate obtained based on the parameters still have high accuracy, thereby ensuring high precision and accuracy of the positioning sub-region in spatial positioning.

FIG. 3 is a schematic flowchart of a map construction method according to still another exemplary embodiment of this application. This embodiment describes how to determine a positioning sub-region in the at least one sub-region based on the foregoing embodiments shown in FIG. 1A, FIG. 1B, and FIG. 1C, and as shown in FIG. 3, the following steps are included:

Step 301: Determine a first spatial coordinate of an image capturing apparatus when the image capturing apparatus captures a depth image in a target space and determine attitude information of the image capturing apparatus when the image capturing apparatus captures the depth image.

Step 302: Perform region segmentation on the depth image, to obtain at least one sub-region.

For descriptions of step 301 and step 302, refer to the description of the foregoing embodiment shown in FIG. 1A. Details are not described herein again.

Step 303: Recognize a sub-region including an icon from the at least one sub-region, and determine the sub-region including the icon as a positioning sub-region.

In an embodiment, the icon may be a label of a store (for example, a trademark of a store), or be a sign. The sign, for example, may be a toilet sign, a street sign, a lobby sign of a hotel, a direction sign used in a parking lot, a park sign, or the like. In an embodiment, the at least one sub-region may be sequentially inputted into a trained mathematical model, and at least one recognition result may be obtained through the mathematical model, where the mathematical model is configured to recognize a sub-region including an icon. A positioning sub-region is determined in the at least one sub-region based on the at least one recognition result. Obtaining the positioning sub-region through the trained mathematical model can improve efficiency of recognizing the positioning sub-region. Massive icons as exemplified above may be collected to train the mathematical model, and then, at least one sub-region is inputted into the trained mathematical model to obtain the positioning sub-region, for example, an icon similar to "M" shown in FIG. IE. A sub-region including the icon similar to "M" can be regarded as a positioning sub-region.

In another embodiment, for a specific scene, for example, a shopping mall or a hotel lobby, an icon in the scene can be collected in advance to obtain image features of the icon that is collected in advance, and the icon that is collected in advance can be matched in each sub-region. If the matching succeeds, it indicates that there is an icon in the sub-region, and the sub-region can be determined as a positioning sub-region.

Step 304: Determine a second spatial coordinate of the positioning sub-region in the target space based on distance information recorded in the depth image, the first spatial coordinate, and the attitude information.

Step 305: Construct a map based on the second spatial coordinate.

For descriptions of step 304 to step 305, refer to the description of the foregoing embodiment shown in FIG. 1A. Details are not described herein again.

Based on the beneficial technical effects of the embodiment shown in FIG. 1A, in this embodiment, because an icon usually represents a specific practical meaning, for example, represents a cake shop, a clothing store, a restaurant, an indication of a direction, or the like, recognizing the positioning sub-region including the icon from the at least one sub-region makes the description of a target space in a map richer.

FIG. 4 is a schematic flowchart of a map construction method according to yet another exemplary embodiment of this application. This embodiment describes how to determine a positioning sub-region in the at least one sub-region based on the foregoing embodiments shown in FIG. 1A, FIG. 1B, and FIG. 1C, and as shown in FIG. 4, the following steps are included:

Step 401: Determine a first spatial coordinate of an image capturing apparatus when the image capturing apparatus captures a depth image in a target space and determine attitude information of the image capturing apparatus when the image capturing apparatus captures the depth image.

Step 402: Perform region segmentation on the depth image, to obtain at least one sub-region.

For descriptions of step 401 and step 402, refer to the description of the foregoing embodiment shown in FIG. 1A. Details are not described herein again.

Step 403: Determine a feature vector of each sub-region in the at least one sub-region.

In an embodiment, the feature vector may be determined based on an image feature of each sub-region. The image feature is, for example, a gradient histogram, a color feature, or an edge feature. Therefore, a gradient histogram, a color feature, an edge features, and the like in each sub-region may be recognized, to obtain a feature vector of the sub-region.

Step 404: Determine a positioning sub-region based on the feature vector of each sub-region and a stored feature vector.

In an embodiment, a quantity of stored feature vectors can be determined based on a quantity of feature vectors in a specific scene, for example, a feature vector corresponding to the ground, a feature vector corresponding to glass, and a feature vector corresponding to a wall. The stored feature vectors can represent relatively common objects in the scene. In an embodiment, for each sub-region, a vector distance between the feature vector of the sub-region and a stored feature vector may be determined, to obtain at least one vector distance, where a quantity of the at least one vector distance is the same as a quantity of the stored feature vector. The sub-region is determined as the positioning sub-region if the at least one vector distance satisfies the preset condition. For example, there are five stored feature vectors. For each sub-region, vector distances between a feature vector of the sub-region and the five feature vectors are calculated, to obtain five vector distances. If the five vector distances all satisfy the preset condition, it indicates that the sub-region is not similar to the five feature vectors, and the sub-region may be regarded as a unique region, for example, a sub-region in which a door handle is located shown on the right side in FIG. 1D and the right side in FIG. IE. It should be noted that the unique region may alternatively be a fire extinguisher, a pillar, an elevator, or the like in the target space. The unique regions may be regarded as regions having impact on positioning of a robot. In an embodiment, the preset condition, for example, may be that at least one vector distance is greater than or equal to a preset threshold, indicating that the distance between the feature vector of the sub-region and the stored feature vector is relatively large, and the object in the sub-region is not similar to a known object. In this application, the preset threshold is not limited to a specific value, and can be adjusted according to a specific scene.

Step 405: Determine a second spatial coordinate of the positioning sub-region in the target space based on distance information recorded in the depth image, the first spatial coordinate, and the attitude information.

Step 406: Construct a map based on the second spatial coordinate.

For descriptions of step 405 and step 406, refer to the description of the foregoing embodiment shown in FIG. 1A. Details are not described herein again.

In addition to the beneficial technical effects of the embodiment shown in FIG. 1A, in this embodiment, because a feature vector of each sub-region usually represents a specific feature, for example, a color or an edge, determining a positioning sub-region based on a feature vector of each sub-region and a stored feature vector may enable the positioning sub-region to have a unique practical meaning, thereby enriching the description of a scene in a map.

It should be noted that the embodiment shown in FIG. 3 and the embodiment shown in FIG. 4 may be combined with each other. In an embodiment, the positioning sub-region includes an icon, and at least one vector distance of the positioning sub-region also satisfies the preset condition.

In the foregoing embodiment of constructing a map based on an icon and a unique object, the constructed map may be enabled to have both an icon and a unique object, thereby making descriptions in the map richer and more suitable for human cognitive habits. For a target space having only an icon or a unique object, a high-precision map can still be constructed, thereby greatly improving versatility in a scene. In addition, by comparison with a map constructed based on a vision method, the storage space is greatly freed up.

Further, based on the embodiment shown in any one of FIG. 1A to FIG. 4, the constructing a map based on the second spatial coordinate may include:

determining image description information of the positioning sub-region; and
adding the image description information to a location corresponding into the second spatial coordinate in the map.

In an embodiment, image description information may represent a physical meaning of a target object included in the positioning sub-region. For example, if the target object included in the positioning sub-region is a door handle, "door handle" may be regarded as image description information of the positioning sub-region, and "door handle" may be added to a location corresponding to the second spatial coordinate in the map, so that the physical meaning corresponding to the second spatial coordinate can be obtained.

Adding the image description information into the location corresponding to the second spatial coordinate in the map can enable the map to record a physical meaning corresponding to an object in the target space, so that the description of the target space in the map is richer.

Corresponding to the foregoing embodiment of the map construction method, this application further provides an embodiment of a map construction apparatus.

FIG. 5 is a schematic structural diagram of a map construction apparatus according to an exemplary embodiment of this application. As shown in FIG. 5, the map construction apparatus includes:

a first determining module 51, configured to determine a first spatial coordinate of an image capturing apparatus when the image capturing apparatus captures a depth image in a target space and determine attitude information of the image capturing apparatus when the image capturing apparatus captures the depth image;
an image segmentation module 52, configured to perform region segmentation on the depth image, to obtain at least one sub-region;
a second determining module 53, configured to determine a positioning sub-region in the at least one sub-region obtained by the image segmentation module 52;
a third determining module 54, configured to determine, based on distance information recorded in the depth image, and the first spatial coordinate and the attitude information determined by the first determining module 51, a second spatial coordinate of the positioning sub-region in the target space determined by the second determining module 53; and
a map construction module 55, configured to construct a map based on the second spatial coordinate determined by the third determining module 54.

The image segmentation module 52 performs segmentation to obtain at least one sub-region, the second determining module 53 obtains the positioning sub-region from the at least one sub-region, and the third determining module 54 performs spatial positioning on the positioning sub-region in the target space by using information about a distance between a spatial point and the image capturing apparatus recorded in the depth image, the first spatial coordinate of the image capturing apparatus in the target space, and the attitude information of the image capturing apparatus, to avoid losing positioning information of the spatial point in a height direction, thereby improving accuracy of spatial point positioning. Because the second spatial coordinate include three-dimensional information of the positioning sub-region in the target space, the map constructed by the map construction module 55 can accurately record location information of the spatial point in the target space.

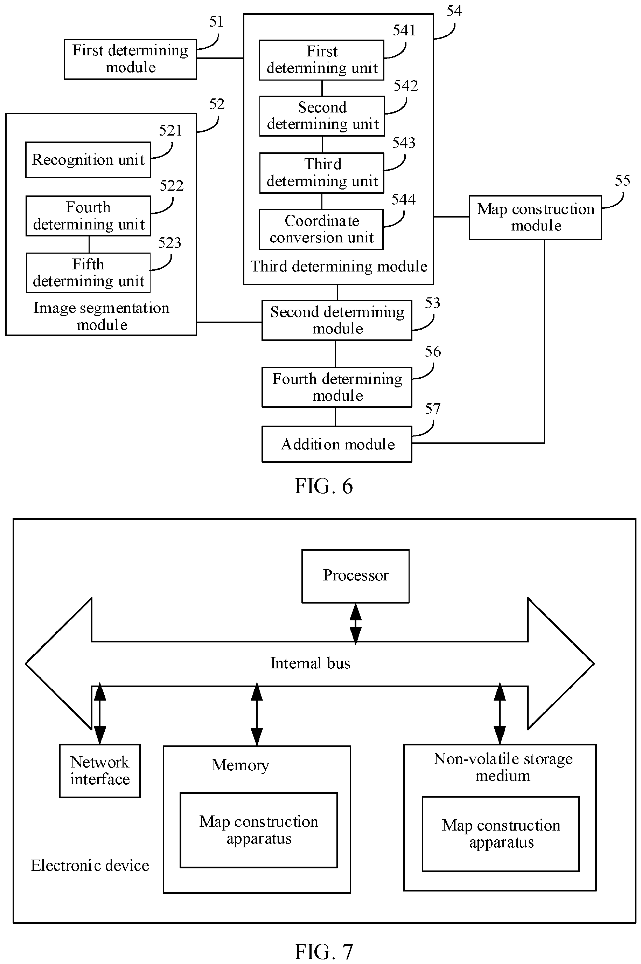

FIG. 6 is a schematic structural diagram of a positioning apparatus according to another exemplary embodiment of this application. As shown in FIG. 6, based on the embodiment shown in FIG. 5, the third determining module 54 may include:

a first determining unit 541, configured to determine an image plane coordinate of a pixel in the positioning sub-region;
a second determining unit 542, configured to determine, according to the distance information recorded in the depth image, a spatial distance between a spatial point corresponding to the image plane coordinate and the first spatial coordinate;
a third determining unit 543, configured to determine, based on the spatial distance, a third spatial coordinate of the spatial point corresponding to the image plane coordinate in a camera coordinate system in which the image capturing apparatus is located; and
a coordinate conversion unit 544, configured to convert the third spatial coordinate in the camera coordinate system into the second spatial coordinate in the target space based on the first spatial coordinate and the attitude information. In an embodiment, the coordinate conversion unit 544 is configured to convert the third spatial coordinate into the second spatial coordinate in the target space through the spatial transformation matrix, where elements of the spatial transformation matrix include the attitude information and the first spatial coordinate.

Since the elements of the spatial transformation matrix used by the coordinate conversion unit 544 include attitude parameters and the first spatial coordinate of the image capturing apparatus, where the parameters all have high precision, it can be ensured that the second spatial coordinate obtained by the coordinate conversion unit 544 based on the parameters still have high accuracy, thereby ensuring high precision and accuracy of the first sub-region in spatial positioning.

In an embodiment, the apparatus further includes:

a fourth determining module 56, configured to determine image description information of the positioning sub-region; and
an addition module 57, configured to add the image description information to a location corresponding to the second spatial coordinate in the map.

Adding, through the addition module 57, the image description information to the location corresponding to the second spatial coordinate in the map can enable the map to record a physical meaning corresponding to an object in the target space, so that the description of the target space in the map is richer.

In an embodiment, the positioning sub-region includes a sub-region including an icon in the at least one sub-region, and the image segmentation module 52 may include:

a recognition unit 521, configured to input the at least one sub-region separately into a trained mathematical model, and at least one recognition result may be obtained through the mathematical model, where the mathematical model is configured to recognize a sub-region including an icon; and determine the positioning sub-region based on the at least one recognition result.

Because an icon usually represents a specific practical meaning, for example, represents a cake shop, a clothing store, a restaurant, an indication of a direction, or the like, determining, by the recognition unit 521 by recognizing a sub-region including an icon from the at least one sub-region, the sub-region including the icon as a positioning sub-region can enable the positioning sub-region to have a specific practical meaning, and make the description of a scene in a map richer.

In an embodiment, the positioning sub-region includes a sub-region satisfying a preset condition in the at least one sub-region, and the image segmentation module 52 may include:

a fourth determining unit 522, configured to determine a feature vector of each sub-region in the at least one sub-region; and
a fifth determining unit 523, configured to determine a second positioning sub-region based on the feature vector of each sub-region and a stored feature vector.

In an embodiment, the fifth determining unit 523 is configured to:
for each sub-region, determine a vector distance between a feature vector of each sub-region and a stored feature vector, to obtain at least one vector distance, where a quantity of the at least one vector distance is the same as a quantity of the stored feature vector; and determine the sub-region as the positioning sub-region if the at least one vector distance satisfies the preset condition.

Because a feature vector of each sub-region usually represents a specific feature, for example, a color or an edge, determining, by the fifth determining unit 523 based on a feature vector of each sub-region and a stored feature vector, a positioning sub-region used for spatial positioning may enable the positioning sub-region to have a unique practical meaning, thereby enriching the description of a scene in a map.

The embodiment of the map construction apparatus in this application is applicable to an electronic device. The apparatus embodiments may be implemented by using software, or hardware or in a manner of a combination of software and hardware. Using a software implementation as an example, as a logical apparatus, the apparatus is formed by reading corresponding computer program instructions from a non-volatile storage medium into an internal memory by a processor of an electronic device where the apparatus is located, to implement any embodiment of FIG. 1A to FIG. 4. On a hardware level, as shown in FIG. 7, which is a hardware structural diagram of an electronic device in which a map construction apparatus according to this application is located, in addition to a processor, a memory, a network interface, and a non-transitory storage shown in FIG. 7, the electronic device in which the apparatus is located in the embodiment may usually further include other hardware according to actual functions of the electronic device. Details will not be repeated herein.

For details of implementation processes of corresponding steps in the foregoing method, reference may be made to the foregoing implementation processes of the functions and effects of the units in the apparatus, and details are not described herein again.

After considering the specification and carrying out the invention disclosed herein, a person skilled in the art would easily conceive of other implementations of this application. This application is intended to cover any variants, use, or adaptive changes of this application following the general principles of this application, and includes the common general knowledge and common technical means in the art that are undisclosed in this application. The specification and the embodiments are considered to be merely exemplary, and the actual scope and spirit of this application are pointed out in the following claims.

It should also be noted that the terms "include", "comprise", and any other variants mean to cover the non-exclusive inclusion. Therefore, the process, method, article, or device that includes a series of elements not only includes the elements, but also includes other elements not clearly listed, or include the elements inherent to the process, method, article or device. Without further limitation, the element defined by a phrase "include a..."

does not exclude other same elements in the process, method, article, or device that includes the element.

**Claims**

1.  A map construction method, comprising:

    determining a first spatial coordinate of an image capturing apparatus when the image capturing apparatus captures a depth image in a target space;
    determining attitude information of the image capturing apparatus when the image capturing apparatus captures the depth image;
    performing region segmentation on the depth image, to obtain at least one sub-region;
    determining a positioning sub-region in the at least one sub-region;
    determining a second spatial coordinate of the positioning sub-region in the target space based on distance information recorded in the depth image, the first spatial coordinate, and the attitude information; and
    constructing a map based on the second spatial coordinate.

2.  The method according to claim 1, wherein determining the second spatial coordinate based on the distance information, the first spatial coordinate, and the attitude information comprises:

    determining an image plane coordinate of a pixel in the positioning sub-region;
    determining, according to the distance information, a spatial distance between a spatial point corresponding to the image plane coordinate and the first spatial coordinate;
    determining, based on the spatial distance, a third spatial coordinate of the spatial point corresponding to the image plane coordinate in a camera coordinate system in which the image capturing apparatus is located; and
    converting the third spatial coordinate in the camera coordinate system into the second spatial coordinate in the target space based on the first spatial coordinate and the attitude information.

3.  The method according to claim 1, wherein the constructing a map based on the second spatial coordinate comprises:

    determining image description information of the positioning sub-region; and
    adding the image description information into a location corresponding to the second spatial coordinate in the map.

4.  The method according to claim 1, wherein the positioning sub-region comprises a sub-region comprising an icon in the at least one sub-region.

5.  The method according to claim 4, wherein determining the positioning sub-region in the at least one sub-region comprises:

    inputting the at least one sub-region to a trained mathematical model, wherein the mathematical model is configured to recognize the sub-region comprising an icon;
    obtaining at least one recognition result by using the mathematical model; and
    determining the positioning sub-region based on the at least one recognition result.

6.  The method according to claim 1, wherein the positioning sub-region comprises a sub-region satisfying a preset condition in the at least one sub-region.

7.  The method according to claim 6, wherein determining the positioning sub-region in the at least one sub-region comprises:
    for each sub-region in the at least one sub-region,

    determining a feature vector of the sub-region;
    determining a vector distance between the feature vector of the sub-region and a stored feature vector, to obtain at least one vector distance, wherein a quantity of the at least one vector distance is the same as a quantity of the stored feature vector; and
    determining the sub-region as the positioning sub-region in response to determining the at least one vector distance satisfies the preset condition.

8.  The method according to claim 1, wherein performing region segmentation on the depth image comprises:
    performing region segmentation on the depth image based on gray level distribution of the depth image.

9.  A map construction apparatus, comprising:

    a first determining module, configured to determine a first spatial coordinate of an image capturing apparatus when the image capturing apparatus captures a depth image in a target space and determine attitude information of the image capturing apparatus when the image capturing apparatus captures the depth image;
    an image segmentation module, configured to perform region segmentation on the depth image, to obtain at least one sub-region;
    a second determining module, configured to determine a positioning sub-region in the at least one sub-region obtained by the image segmentation module;

a third determining module, configured to determine a second spatial coordinate of the positioning sub-region in the target space determined by the second determining module based on distance information recorded in the depth image, and the first spatial coordinate and the attitude information determined by the first determining module; and

a map construction module, configured to construct a map based on the second spatial coordinate.

10. A storage medium, storing a computer program, the computer program causing a processor to perform the map construction method according to any one of claims 1 to 8.

11. An electronic device, comprising:

a processor; and

a memory, configured to store processor-executable instructions, wherein

the processor is configured to perform the map construction method according to any one of claims 1 to 8.

Determine a first spatial coordinate of an image capturing apparatus when the image capturing apparatus captures a depth image in a target space and determine attitude information of the image capturing apparatus when the image capturing apparatus captures the depth image

101

Perform region segmentation on the depth image, to obtain at least one sub-region

102

Determine a positioning sub-region in the at least one sub-region

103

Determine a second spatial coordinate of the positioning sub-region in the target space based on distance information recorded in the depth image, the first spatial coordinate, and the attitude information

104

Construct a map based on the second spatial coordinate

105

FIG. 1A

FIG. 1B

FIG. 1C

FIG. 1D

FIG. 1E

Determine a first spatial coordinate of an image capturing apparatus when the image capturing apparatus captures a depth image in a target space and determine attitude information of the image capturing apparatus when the image capturing apparatus captures the depth image — 201

Perform region segmentation on the depth image, to obtain at least one sub-region — 202

Determine a positioning sub-region in the at least one sub-region — 203

Determine an image plane coordinate of a pixel in the positioning sub-region — 204

Determine, according to the distance information recorded in the depth image, a spatial distance between a spatial point corresponding to the image plane coordinate and the first spatial coordinate — 205

Determine, based on the spatial distance between the spatial point corresponding to the image plane coordinate and the first spatial coordinate, a third spatial coordinate of the spatial point corresponding to the image plane coordinate in a camera coordinate system — 206

Convert the third spatial coordinate in the camera coordinate system into the second spatial coordinate in the target space based on the first spatial coordinate and the attitude information — 207

Construct a map based on the second spatial coordinate — 208

FIG. 2

Determine a first spatial coordinate of an image capturing apparatus when the image capturing apparatus captures a depth image in a target space and determine attitude information of the image capturing apparatus when the image capturing apparatus captures the depth image
301

Perform region segmentation on the depth image, to obtain at least one sub-region
302

Recognize a sub-region including an icon from the at least one sub-region, and determine the sub-region including the icon as a positioning sub-region
303

Determine a second spatial coordinate of the positioning sub-region in the target space based on distance information recorded in the depth image, the first spatial coordinate, and the attitude information
304

Construct a map based on the second spatial coordinate
305

FIG. 3

Determine a first spatial coordinate of an image capturing apparatus when the image capturing apparatus captures a depth image in a target space and determine attitude information of the image capturing apparatus when the image capturing apparatus captures the depth image 401

Perform region segmentation on the depth image, to obtain at least one sub-region 402

Determine a feature vector of each sub-region in the at least one sub-region 403

Determine a positioning sub-region based on the feature vector of each sub-region and a stored feature vector 404

Determine a second spatial coordinate of the positioning sub-region in the target space based on distance information recorded in the depth image, the first spatial coordinate, and the attitude information 405

Construct a map based on the second spatial coordinate 406

FIG. 4

First determining module 51

Third determining module 54

Map construction module 55

Second determining module 53

Image segmentation module 52

FIG. 5

First determining module — 51

54

First determining unit — 541

Second determining unit — 542

Third determining unit — 543

Coordinate conversion unit — 544

Third determining module

Map construction module — 55

52

Recognition unit — 521

Fourth determining unit — 522

Fifth determining unit — 523

Image segmentation module

Second determining module — 53

Fourth determining module — 56

Addition module — 57

FIG. 6

Processor

Internal bus

Network interface

Memory

Map construction apparatus

Non-volatile storage medium

Map construction apparatus

Electronic device

FIG. 7

## INTERNATIONAL SEARCH REPORT

| International application No. |
|---|
| **PCT/CN2019/092775** |

**A.    CLASSIFICATION OF SUBJECT MATTER**

G05D 1/02(2006.01)i

According to International Patent Classification (IPC) or to both national classification and IPC

**B.    FIELDS SEARCHED**

Minimum documentation searched (classification system followed by classification symbols)

G05D

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: 摄像, 深度图像, 灰度, 距离, 区域, 构建, 地图, camera, depth, image, gray scale, distance, area, map

**C.    DOCUMENTS CONSIDERED TO BE RELEVANT**

| Category* | Citation of document, with indication, where appropriate, of the relevant passages | Relevant to claim No. |
|---|---|---|
| X | CN 105700525 A (SHENYANG UNIVERSITY OF TECHNOLOGY) 22 June 2016 (2016-06-22)<br>    description, paragraphs [0030]-[0041] | 1-11 |
| A | CN 104777835 A (WUHAN HANDY ROBOTICS TECHNOLOGY INC.) 15 July 2015 (2015-07-15)<br>    entire document | 1-11 |
| A | CN 105607635 A (DONGGUAN SONGDI INTELLIGENT ROBOT TECHNOLOGY CO., LTD.) 25 May 2016 (2016-05-25)<br>    entire document | 1-11 |
| A | US 2010094460 A1 (SAMSUNG ELECTRONICS CO., LTD.) 15 April 2010 (2010-04-15)<br>    entire document | 1-11 |
| A | US 2014107842 A1 (ELECTRONICS AND TELECOMMUNICATIONS RESEARCH INSTITUTE) 17 April 2014 (2014-04-17)<br>    entire document | 1-11 |

☐ Further documents are listed in the continuation of Box C.          ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **06 September 2019** | **29 September 2019** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/092775**

| Patent document cited in search report | | | Publication date (day/month/year) | Patent family member(s) | | | Publication date (day/month/year) |
|---|---|---|---|---|---|---|---|
| CN | 105700525 | A | 22 June 2016 | None | | | |
| CN | 104777835 | A | 15 July 2015 | None | | | |
| CN | 105607635 | A | 25 May 2016 | None | | | |
| US | 2010094460 | A1 | 15 April 2010 | KR | 20100040234 | A | 19 April 2010 |
| US | 2014107842 | A1 | 17 April 2014 | KR | 20140049152 | A | 25 April 2014 |

Form PCT/ISA/210 (patent family annex) (January 2015)